# EUROPEAN PATENT APPLICATION

(11) **EP 1 923 827 A1**
(43) Date of publication of application: **21.05.2008**
(21) Application number: 07021988.6
(22) Date of filing: 13.11.2007
(51) Int. Cl.: G06Q 10/00

(54) **Tracking condition of mail in transit**

(30) Priority: 15.11.2006 US 599713
(71) Applicant: Pitney Bowes, Inc., Stamford Connecticut 06926-0700 (US)
(72) Inventor: Quine, Douglas B., Bethel, Connecticut 06801 (US)
(74) Representative: HOFFMANN EITLE

(57) **Abstract**

A parcel (102) includes a sensor to detect whether the parcel has experienced a change in condition. The parcel (102) also has a mechanism, such as a changeable barcode, to indicate the change in condition. While the parcel is in transit through a parcel delivery system (100), a reader (104) that is part of the system reads an indication from the parcel that the parcel has experienced the change in condition. The system may inform the sender (110) and/or the recipient (112) of the fact that the change in condition has been detected and may divert the parcel from delivery to the recipient (112). In this way, a parcel (102) may self-monitor for potential damage, and the parcel delivery system (100) may react to an event, in which a parcel (102) suffers damage, before the parcel (102) is delivered to the intended recipient (112).

## Description

This invention is concerned with parcel delivery systems, and particularly such systems which track the progress of parcels through the system.

Conventional trace and track systems for parcels and the like indicate that the parcel has been observed at various points within a parcel delivery system. In some cases, a projected delivery date may also be determined.

Occasionally parcels suffer damage or other adverse change in condition while being transported from the sender to the recipient. For example, fragile items may suffer breakage, including for instance beverages in glass bottles. Frozen foods shipped in dry ice may be exposed to excessive and/or unduly prolonged heat and may melt or spoil. Electronic equipment may be dropped, thereby suffering damage.

When a parcel suffers damage in transit, and particularly hidden damage, the parcel is customarily delivered in its damaged state to the recipient. It is then incumbent on the recipient to notify the sender of the damage, to request a replacement shipment, to dispatch the damaged item for return to the sender, etc. All of these activities may entail considerable inconvenience for both the recipient and the sender. It would be desirable to minimize the inconvenience resulting from damage to parcels in transit.

According to an aspect of the invention, a system includes a parcel appointed for transport from a sender to a recipient. The parcel includes at least one sensor for detecting a change in condition in contents of the parcel. The parcel also includes an indicator mechanism which is responsive to the sensor(s) and is for indicating the change in condition in the parcel contents. The system also includes a reading mechanism. The reading mechanism is separate from the parcel (i.e., outside of the parcel and not attached to it). The reading mechanism is for reading the indicator mechanism while the parcel is in transit from the sender to the recipient. The reading mechanism is also for determining, prior to delivery of the parcel to the recipient, that the change in condition of the parcel contents has occurred.

The system may further include a mechanism which is responsive to the reading mechanism and is for notifying the sender, the recipient, or both, prior to delivery of the parcel to the recipient, that the change in condition has occurred.

The indicator mechanism may include a mechanism for changing the destination of the parcel. For example, the parcel may display a barcode and the indicator mechanism may include a mechanism for changing the barcode. In some embodiments, the parcel displays the barcode on a so-called "electronic ink" display, and includes a control circuit or the like to change the barcode displayed on the electronic ink display from indicating the recipient's mailing address to another barcode which indicates, as the parcel's (updated) destination, a depot or the like at which the sender receives damaged parcels.

In other embodiments, the parcel includes two barcodes printed near each other on a card or plate. One barcode (the "first") indicates the recipient's mailing address. The other barcode (the "second") indicates the mailing address of the sender's damaged parcel depot. The parcel may include a window through which the first barcode is normally visible. Normally the second barcode is not visible. The card or plate with the barcode may be spring-loaded. In the event of a detected change in condition to the parcel contents, the spring-loading may be released to allow the card or plate to move. The movement of the card or plate moves the first barcode away from the window, thereby moving the first barcode away from a visible position on the parcel. The movement of the card or plate also moves the second barcode to the locus of the window, thereby replacing the first barcode at the visible position with the second barcode. The second barcode can now be read through the window.

With the change in barcode (whether by actuating a spring-loaded plate or driving a change in an electronic ink display), the parcel's destination is effectively changed, since automatic barcode reading and parcel sorting equipment in the parcel delivery system may, in response to reading the new barcode, divert the parcel from the recipient to the sender's damaged parcel depot (or directly back to the shipping location, as the case may be).

The barcode may be a 4CB (4-State Customer Barcode) of the type described in a standard promulgated by the U.S. Postal Service.

In other embodiments, instead of or in addition to displaying a barcode, the parcel may include an RFID (radio frequency identification) tag which identifies the parcel and its destination. In response to a change in condition in the parcel contents, the destination indicated by the RFID tag may be changed. The parcel system may then divert the parcel from the recipient to the sender's damaged parcel depot (e.g.) in response to reading the changed destination information from the RFID tag while the parcel is passing through the system. In addition or alternatively, a flag and/or other data besides the changed destination information may be stored in the RFID tag to indicate that the change in condition has occurred.

In another aspect of the invention, a parcel is appointed for delivery from a sender to a recipient. The parcel includes a wrapper, parcel contents within the wrapper and a barcode visible on or through the wrapper. The parcel further includes a detecting mechanism for detecting a change in condition in the parcel contents, and a mechanism responsive to the detecting mechanism for selectively changing the barcode while the parcel is in transit from the sender to the recipient.

In some embodiments, the parcel displays the barcode on a so-called "electronic ink" display, and includes a control circuit or the like to change the barcode displayed on the electronic ink display from indicating the recipient's mailing address to another barcode which indicates, as the parcel's (updated) destination, a depot or the like at which the sender receives damaged parcels.

In other embodiments, the parcel includes two barcodes printed near each other on a card or plate. One barcode (the "first") indicates the recipient's mailing address. The other barcode (the "second") indicates the mailing address of the sender's damaged parcel depot. The parcel may include a window through which the first barcode is normally visible. Normally the second barcode is not visible. The card or plate with the barcode may be spring-loaded. In the event of a detected change in condition to the parcel contents, the spring-loading may be released to allow the card or plate to move. The movement of the card or plate moves the first barcode away from the window, thereby moving the first barcode away from a visible position on the parcel. The movement of the card or plate also moves the second barcode to the locus of the window, thereby replacing the first barcode at the visible position with the second barcode. The second barcode can now be read through the window. Before the card or plate is moved (i.e., during a first time period), the first barcode is visible through the window and the second barcode is not visible through the window. After the card or plate is moved (i.e., during a second time period), the second barcode is visible through the window and the first barcode is not visible through the window.

In still another aspect of the invention, a method includes initiating shipment of a parcel from a sender to a recipient, and using a sensor in the parcel to detect a change in condition in contents of the parcel while the parcel is in transit from the sender to the recipient. The method further includes reporting the detected change in condition to the sender, to the recipient or to both, prior to delivering the parcel to the recipient. (In fact, the parcel may be diverted from delivery to the recipient in response to the detected change in condition.)

An RFID device in the parcel or a barcode on the parcel may be read prior to reporting the change in condition, and the reporting of the change in condition may be in response to the reading of the RFID device or the barcode, which may indicate that the parcel contents are in a damaged condition.

In yet another aspect, a method includes initiating shipment of a parcel from a sender to a recipient, and using a sensor in the parcel to detect a change in condition in contents of the parcel while the parcel is in transit from the sender to the recipient. The method further includes diverting the parcel from delivery to the recipient, in response to the detected change in condition.

An RFID device in the parcel or a barcode on the parcel may be read prior to diverting the parcel, and the diverting of the parcel may be in response to the reading of the RFID device or the barcode, which may indicate that the parcel contents are in a damaged condition.

Therefore, it should now be apparent that the invention substantially achieves all the above aspects and advantages. Additional aspects and advantages of the invention will be set forth in the description that follows, and in part will be obvious from the description, or may be learned by practice of the invention. Various features and embodiments are further described in the following figures, description and claims.

The accompanying drawings illustrate presently preferred embodiments of the invention, and together with the general description given above and the detailed description given below, serve to explain the principles of the invention. As shown throughout the drawings, like reference numerals designate like or corresponding parts.

FIG. 1 is a simplified schematic block diagram of a parcel delivery system provided according to aspects of the present invention.

FIG. 2 is a schematic representation of a parcel that may be transported by the system of FIG. 1.

FIG. 3 is a schematic representation of a parcel that may be transported by another embodiment of the system of FIG. 1.

FIG. 4 is a flow chart that illustrates a process that may be performed in the parcel of FIG. 2.

FIG. 5 is a schematic illustration of a barcode changing mechanism that may be included in some embodiments of the parcel of FIG. 2.

FIG. 6 is a flow chart that illustrates a process that may be performed in the system of FIG. 1.

The present invention, in certain of its aspects, may provide an improved parcel tracing and tracking system. In the system of the present invention, parcel condition may be tracked and responded to in close to real time, in addition to tracking the whereabouts of the parcel. To track the condition of the parcel, one or more sensors are included in the parcel. For example, a liquid sensor may be included in a parcel that contains a bottled liquid or liquids, to detect breakage of the bottle(s). A temperature sensor may be included in a frozen parcel to detect whether the parcel has thawed out. An acceleration sensor may be included in a parcel that contains a fragile electronic device to detect whether the parcel is subjected to a shock which might damage the electronic device. A tampering sensor may be included to detect whether the parcel has been subjected to unauthorized opening.

Suitable circuitry may be included in the parcel to receive an output from the sensor(s) and to cause an indication that an adverse change in condition has occurred with respect to the parcel. In some embodiments, the outside of the parcel includes an electronic ink display, which may be driven to indicate the change in condition. The change in condition may be indicated by a change in a barcode displayed on the electronic ink display. The changed barcode may be read by a barcode reader deployed in the parcel delivery system, thereby informing the system of the change of condition in the parcel that has occurred. The system may then take remedial action, such as notifying the sender and/or the recipient of the parcel that the parcel has suffered damage. The change in the barcode may automatically cause the parcel to be re-routed from the recipient to the sender or to a party operating on behalf of the sender. The remedial action may include triggering shipment of a replacement item. At the same time the displayed barcode is changed, the human-readable information (if any) that is displayed may also be changed to indicate that the parcel has or may have suffered damage.

In other embodiments a mechanical device for changing the barcode may be employed.

In still other embodiments, the parcel may include an RFID tag in addition to or instead of displaying the barcode. Suitable data and/or a suitable flag to indicate a change of condition may be written into the RFID tag in the event of a change of condition detected by one or more sensors in the parcel. Thereafter, an RFID reader deployed in the parcel delivery system may read the RFID tag, thereby informing the system that a change in condition in the parcel has occurred. Again, remedial action may then be taken, including reporting and/or a change in destination of the parcel, which may occur automatically in the case where destination information stored in the RFID tag has been overwritten to divert the parcel. The remedial action may include triggering shipment of a replacement item.

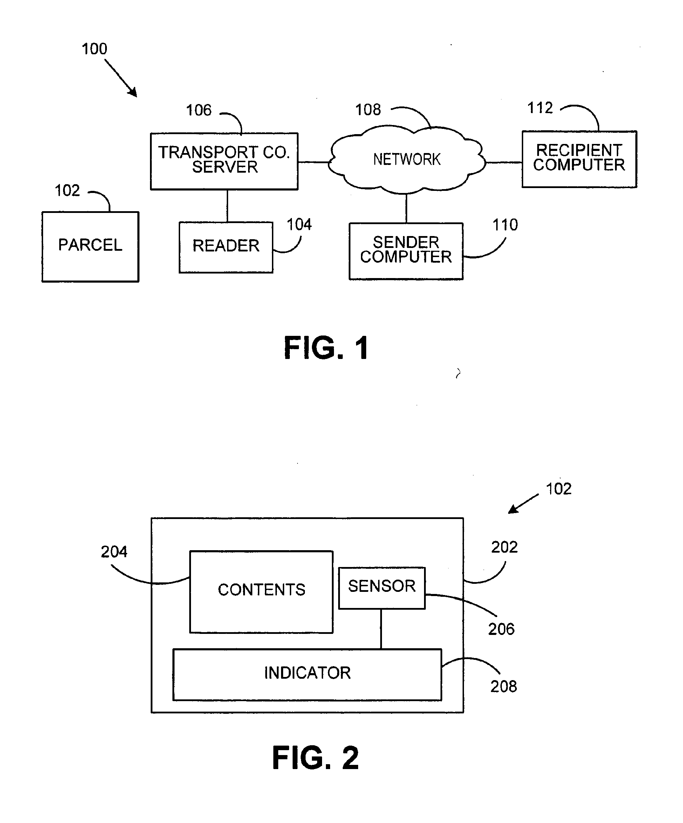

FIG. 1 is a simplified schematic block diagram of a parcel delivery system 100 provided according to aspects of the present invention. In some embodiments, the parcel delivery system may encompass equipment and operations of a postal authority such as the U.S. Postal Service. In other embodiments, the parcel delivery system may be or be part of a nongovernmental entity such as United Parcel Service, Fedex or DHL. FIG. 1 is simplified, at least in the sense that transportation and sortation equipment are not explicitly shown.

Reference numeral 102 in FIG. 1 indicates a parcel that is being transported by (and/or is in a facility of) the parcel delivery system 100. Reference numeral 104 indicates a reading device deployed in the parcel delivery system to read information from parcels transported by the system. For example, if parcels in the system typically have barcodes (one dimensional or two dimensional), the reading device 104 may be configured to read the barcodes. In addition or alternatively, if the parcels typically include RFID tags, then the reading device 104 may be or include an RFID reader. (Although only one reader is explicitly shown in the drawing, it will be appreciated that in practice numerous readers may be deployed throughout the parcel delivery system.)

The parcel delivery system 100 also includes a server computer 106 which receives from the reader(s) 104 information read from the parcels. This information may include tracing/tracking information, including, in accordance with the invention, information indicative of the condition (or at least a detected adverse change in condition) with respect to the parcels.

The server computer 106 may be in communication with a data communication network 108, which may be a conventional network such as the internet or an electronic mail system.

Also shown in FIG. 1 are a computer 110 operated by the sender of the parcel 102 and a computer 112 operated by the intended recipient of the parcel 102. Both the sender computer 110 and the recipient computer 112 may be in communication (at least occasionally or on demand) with the server computer 106, and thus may be able to receive data messages from the server computer 106. Messages sent to either or both of the sender computer 110 and the recipient computer 112 from the server computer 106 may indicate the progress of the parcel 102 through the system 100. Also, in accordance with aspects of the present invention, if the parcel 102 experiences a change in condition during transit through the system 100, the sender computer 110 and/or the recipient computer 112 may receive notification to that effect from the server computer 106. In addition, remedial action may be taken, such as shipment of a replacement item.

FIG. 2 is a schematic representation of the parcel 102.

The parcel 102 includes a wrapper 202, which may be constituted by one or more layers of paperboard, paper, cardboard, etc. The parcel 102 also includes parcel contents 204 which are contained within the wrapper 202 and are the goods and/or items that the sender is sending to the recipient. In some embodiments the parcel contents 204 may be such as to be subject to a possible adverse change in condition. The parcel contents thus may for example be a bottled beverage such as wine or another bottled liquid, frozen food packed in dry ice (not separately shown), or a fragile item such as an article of electronic equipment (e.g., a personal and/or laptop computer, a PDA, a cellular telephone, a DVD player, etc.).

The parcel also includes one or more sensors 206 which may be inside the wrapper 202 (e.g., adjacent and or interspersed with the package contents 204). The number and type(s) of the sensor(s) 206 may be such as to be appropriate to the package contents 204. For example, where the package contents include bottled liquid(s), the sensor(s) 206 may include a liquid sensor to detect breakage of the bottles. Where the package contents 204 include frozen food or other frozen item(s), the sensor(s) may include a temperature sensor to detect whether the temperature of the contents 204 reaches too high a level. Where the package contents include electronic equipment or another fragile item, the sensor(s) may include an acceleration sensor to detect whether the parcel 102 has experienced a shock that is severe enough to threaten the integrity of the parcel contents 204. As another example, the sensor(s) may include a tampering sensor. Such sensors are known, and may include a network of fine wires (not separately shown) in or around the wrapper. When one or more of such wires are broken or interrupted, the tampering sensor may detect that tampering and/or attempting opening of the parcel 102 has occurred. Other types of sensors may additionally or alternatively be provided. The sensor or sensors may be like a sensor or sensors described in U.S. Patent Nos. 6,795,376 and 6,985,408, which are commonly assigned with, and have the same inventor as, the present invention. The parcel may also include a control circuit or the like, in association with the sensor(s) 206 (but not separately shown) to receive sensor output and take appropriate action in the event that an adverse change of condition is detected by the sensors. As used herein and in the appended claims, a change of condition is any circumstance or occurrence that may support an inference that the parcel contents have or may have suffered damage, but does not include normal transport or handling.

In some embodiments the sensor may be one device that is capable of detecting several different kinds of changes in condition, and may be configurable to select which specific changes in condition are to be detected by the sensor during transport of the parcel. The sensor may include one or more direct sensing devices themselves, as well as processing and/or control circuitry to receive signals from the sensing devices and to drive an indicator such as those described below.

A power source such as a battery may also be incorporated with the parcel 102 but is not separately shown.

The parcel 102 further includes an indicator mechanism 208 that is responsive to the sensor(s) 206 to provide an indication of a change in condition of the parcel in the event that a change of condition is detected by the sensor(s). In one preferred embodiment, the indicator mechanism 208 includes an electronic ink display (not separately shown) that is integrated with the wrapper 202 and is readable by a human or machine in proximity to the parcel 102. In the course of normal transport and delivery of the parcel, the electronic ink display may continuously display information such as a barcode, parcel identification number, recipient's name and address, and/or other information commonly present on a parcel label. The barcode may be in the well-known 4CB format referred to above or in another suitable format for machine readable information. Aside from the barcode, the information may be displayed in human-readable form.

The information may remain unchanged through delivery of the parcel to the recipient, if no change in condition occurs in transit. The information displayed by the electronic ink display may be changed, however, in response to the sensor(s) detecting a change in condition of the parcel. For example, as will be seen, the barcode may be changed to represent a code indicative of the change of condition and/or a new destination address to cause diversion of the parcel away from the recipient (e.g., back to the sender). A human-readable address that is displayed may also be changed to indicate the new destination address. In some embodiments, in the event of a change of condition, the electronic ink display may also be driven to display a human-readable notice such as, "THIS PARCEL MAY HAVE SUFFERED DAMAGE", to provide a human-readable indication that a change in condition was detected. The revised destination may be a substitute for the recipient's address and may be the address of a damaged parcel depot operated by or for the sender of the parcel.

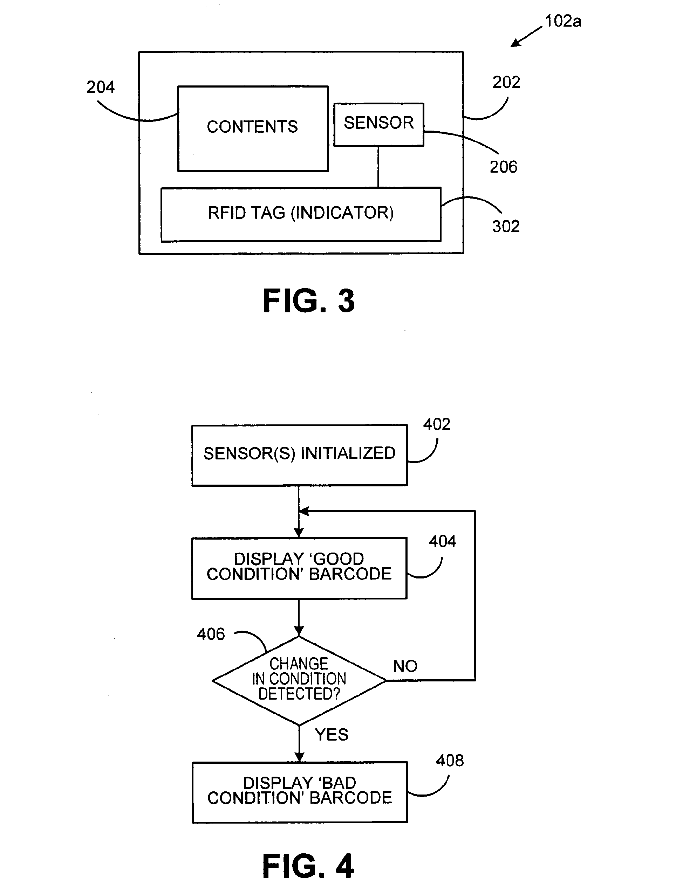

FIG. 3 is a schematic representation of another embodiment of the parcel, indicated by reference numeral 102a. The parcel 102a may be suitable for handling by another embodiment of the parcel delivery system 100, i.e., a system in which tracing, tracking, etc. is based on RFID technology. Accordingly, in the parcel 102a, the indicator mechanism may include an RFID tag 302. In response to the sensor(s) detecting a change of condition of the parcel, the RFID tag 302 may be programmed to output a signal (upon being interrogated by a reader) that indicates that the change in condition had been detected. By way of example, the RFID tag may be programmed, in case of detection of a change in condition, to indicate a revised destination for the parcel. That is, the revised destination may be a substitute for the recipient's address and may be the address of a damaged parcel depot operated by or for the sender of the parcel.

FIG. 4 is a flow chart that illustrates a process that may be performed in the parcel 102.

At 402, if necessary, the sensor(s) is (are) initialized to detect the type(s) of change of condition that may be relevant to the parcel contents. For example, if the sensor is a multi-function sensor, the relevant function(s) of the sensor may be selected as part of step 402.

At 404, the parcel 102 displays a barcode 208 that is appropriate so long as the parcel does not experience a change of condition. For example, the barcode may indicate the recipient's address. In addition or alternatively, the barcode may include one or more bits/digits that positively indicate that no change of condition has been detected. The barcode may, for example, be displayed via an electronic ink display.

At 406, it is determined whether the sensor(s) has (have) detected a change in condition in the parcel. From previous discussion it will be appreciated that the change in condition may be (a) presence of liquid, which indicates breakage of a bottle included in the parcel contents, (b) an increase in the temperature of the parcel contents above a freezing level (or above a sub-freezing level), (c) a shock that is severe enough to have damaged the parcel contents, (d) tampering with the wrapper, etc.

So long as no change in condition is detected by the sensor(s), the process of FIG. 4 repeatedly loops back from 406 to 404, in which the parcel displays the barcode which indicates that the parcel is in good condition. However, if a change in condition is found at 406 to have been detected, then step 408 follows. At step 408, and in response to detection of the change in condition of the parcel 102, the barcode displayed by the parcel is changed to indicate that the change in condition has been detected. For example, the electronic ink display, if present, may be driven to display a different barcode. The new barcode may contain one or more bits or digits that indicate the fact that the change in condition has been detected. In some embodiments, such bit(s) or digit(s) may indicate what type of change of condition has been detected. In some embodiments the digits of the new barcode which indicate the parcel's destination may now indicate a different destination from the recipient's address. For example, as noted before, the new destination may be a damaged parcel depot for the sender.

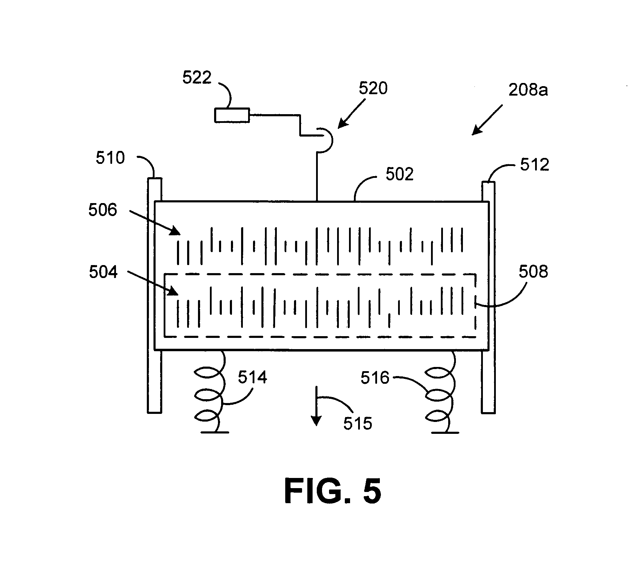

FIG. 5 is a schematic illustration of another embodiment of an indicator mechanism (generally shown at 208a) which may be incorporated in the parcel 102 instead of an electronic ink display.

The indicator mechanism 208a may include a card or plate 502 on which two barcodes--a first barcode shown at 504 and a second barcode shown at 506--may be printed. (It will be observed that the barcodes 504, 506 are "four-state" barcodes like the 4CB, except that the number of bits provided in the simplified example barcodes shown may be less than the number of bits called for by the 4CB standard.) Dashed line rectangle 508 schematically represents a window that is present in the wrapper of the parcel. It will be noted that the first barcode 504 is shown at the locus of the window 508, and is visible on, and displayed by, the parcel. It is assumed that the wrapper is otherwise opaque except at the window 508 so that the second barcode is not visible when the card 502 is positioned as shown in FIG. 5. (In some embodiments, the recipient's address may also be present in human-readable form with the barcode 504, and a re-direction address may be present in human-readable form with the second barcode 506.)

The card 510 may be mounted in parallel tracks 510, 512 located at opposite ends of the card 502. Springs 514, 516 are attached to the side of the card 502 adjacent the first barcode 504 to bias the card 502 toward motion in the direction indicated by arrow mark 518. However, the card is prevented from moving in that direction by a latch 520. A solenoid 522 is provided to selectively release the latch 520. The solenoid 522 may be actuated to release the latch 520 in response to the sensor(s) detecting a change of condition of the parcel. Upon release of the latch 520, the springs 514, 516 pull the card 502 in the direction indicated by arrow mark 518 so that the second barcode 506 replaces the first barcode 504 at the window 508. Consequently, after detection of the change of condition of the parcel, the parcel displays the second barcode (and possibly also the re-direction address in human-readable form) instead of displaying the first barcode (and possibly also the recipient's address in human-readable form). The second barcode may indicate a new destination (e.g., a damaged parcel depot) in place of the recipient's address and/or may contain one or more bits/digits that indicate that a change of condition has occurred with respect to the parcel.

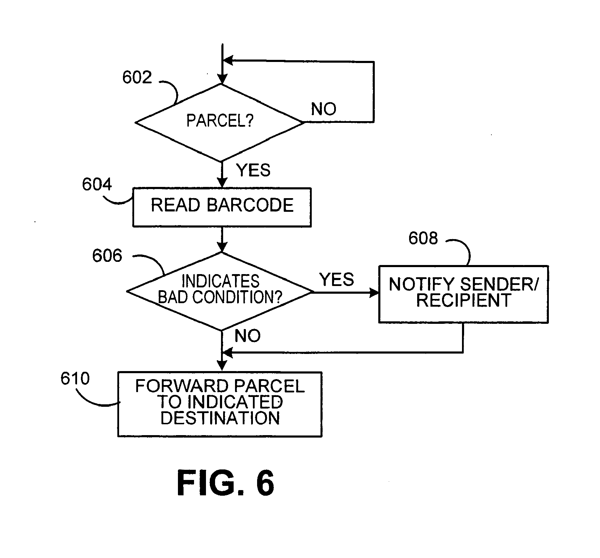

FIG. 6 is a flow chart that illustrates a process that may be performed in the parcel delivery system 100.

At 602 in FIG. 6, it is determined whether a parcel is present to be read by the reader 104 (FIG. 1). From previous discussion it will be appreciated that the parcels may carry barcodes (e.g., 4CB barcodes) and the reader 104 may be adapted to read the barcodes on the parcels. It may also be understood that the reader may be installed at a parcel sortation and/or forwarding location operated by the parcel delivery system, and thus may be located so as to read parcels as they are in transit from senders to recipients.

If at 602 it is determined that a parcel 102 is present for reading, then at step 604 the reader 104 may read the barcode on the parcel. The barcode may, in most cases, be in the same condition as when the parcel was first dispatched for delivery, and may thus indicate that there has been no change of condition in the parcel 102. However, in some cases, the parcel may have changed its barcode, as in step 408 of FIG. 4, to indicate that a change of condition in the parcel has been detected by one or more sensors in the parcel. The detected change of condition may be indicated by the barcode in a number of ways, such as by simply indicating as the destination for the parcel a dedicated address for damaged parcels. In addition or alternatively, a flag, bit or digit value in the barcode may be indicated to specifically indicate that a change of condition in the parcel has been detected. Optionally, the flag, bit or digit value may indicate the specific type of change in condition that has been detected.

In addition to possibly indicating the current destination of the parcel, and possibly explicitly indicating whether a change in condition has occurred in the parcel, the barcode may provide other information as well, such as an identification number for the parcel, the name of the recipient, and possibly also the name of the sender

Accordingly, at 606, the reader 104 (and/or the system 100) determines whether the barcode read at 604 indicates that a change in the condition of the parcel has been detected. If such is the case, then 608 follows. At 608, the system 100 may send a notification of the change of condition of the parcel to either or both of the sender of the parcel and the recipient of the parcel (i.e. from server computer 106 to either or both of sender computer 110 and recipient computer 112). The notification may, in addition to reporting the detected change of condition, advise the sender/recipient of remedial steps that the parcel delivery service is taking and/or of options that the sender/recipient has for electing remedial steps. In some embodiments, the notification to the recipient may advise the recipient that the damaged parcel is being diverted, that it will not be delivered to the recipient, and that the sender is sending a replacement for the damaged parcel. The notification to the recipient may further indicate when the replacement parcel is expected to be delivered to the recipient. In some embodiments, the parcel delivery service may not inform the recipient about the replacement parcel, or even about the damage to the original parcel, unless the sender has previously confirmed to the parcel delivery service that the sender is sending the replacement parcel. In some embodiments, the barcode may contain an indication to the parcel delivery service that the sender will automatically send a replacement parcel upon receiving notification concerning a change in condition in the original parcel. In some embodiments, the parcel delivery service sends to the sender a copy of any notification sent to the recipient.

Step 610 immediately follows the determination at 606, if no change of condition is indicated by the barcode, or step 610 follows step 608, if the barcode indicates a change of condition in the parcel. At 610, the parcel delivery service forwards the parcel to the destination indicated by the barcode (and/or the destination indicated by human readable symbols on the parcel). If it was the case that the barcode was changed to indicate a destination other than the recipient's address, then step 610 results in diverting the parcel from delivery to the originally intended recipient. In another embodiment, the changed barcode may merely indicate a change in condition, and upon reading the change in condition indication, the parcel delivery system may automatically divert the parcel to a predetermined destination for damaged parcels, even though the address for that destination is not indicated in the barcode. In some embodiments, the predetermined destination for damaged parcels may be printed or displayed in alphanumeric characters on the parcel, but such need not be the case. Thus the diversion of the parcel from the intended recipient to an alternative destination in response to a change in condition may be performed by automatic sortation in response to a change in the barcode displayed by the parcel, or may be implemented manually in response to out-sortation of the parcel from a stream of parcels which occurs following a change in condition in the parcel.

In some embodiments, the notification to the sender and/or to the recipient may be omitted, and the parcel may be simply diverted so that the sender can deal with the problem when the diverted parcel is received at its alternative destination. In some embodiments, the notification(s) is (are) sent, but no diversion occurs, and the parcel is delivered to the recipient as originally intended, notwithstanding the change in condition that has been detected.

The notification(s) to the sender and/or to the recipient may be sent by a computing device (not separately shown) that may be integrated with or associated with the reader 104 and/or may be sent by the parcel delivery system server computer 106 or another computer (not separately shown) operated by the parcel delivery system.

In some embodiments, the parcel may carry an RFID tag in addition to or instead of the barcode referred to above, and the reader 104 may be of a type to read RFID tags. The data read from the RFID tag may indicate an alternate destination and/or another indication of a detected change in condition, and the notification(s) and/or diversion of the parcel described above in connection with FIG. 6 may take place in response to reading the changed destination indication and/or the change in condition indication included in the data read from the RFID tag.

As used herein and in the appended claims, the term "changing a barcode" refers both to moving one barcode from a visible position and replacing it with a different barcode at the visible position, as well as to driving a display (such as an electronic ink display) to change a barcode displayed on the display.

The above description, and the flow charts herein, are not meant to imply a fixed order of the enumerated process steps. Rather, the process steps may be performed in any order that is practicable.

A number of embodiments of the present invention have been described. Nevertheless, it will be understood that various modifications may be made without departing from the spirit and scope of the invention. Other variations relating to implementation of the functions described herein can also be implemented. Accordingly, other embodiments are within the scope of the following claims.

## Claims

1. A system comprising:
a parcel (102) appointed for transport from a sender (110) to a recipient (112), the parcel including:
at least one sensor (206) for detecting a change in condition in contents of the parcel; and
indicator means (208, 302), responsive to the at least one sensor (206), for indicating the change in condition; and
reading means (104), separate from the parcel (102), for reading the indicator means (208) while the parcel is in transit from the sender (110) to the recipient (112) and for determining, prior to delivery of the parcel to the recipient (112), that the change in condition has occurred.

2. The system according to Claim 1, further comprising:
means (106), responsive to the reading means (104), for notifying at least one of the sender and the recipient, prior to delivery of the parcel to the recipient, that the change in condition has occurred.

3. The system according to Claim 1 or 2, wherein the indicator means includes a radio frequency identification tag (RFID tag 302).

4. The system according to Claim 1, 2 or 3, wherein the indicator means (208, 302) includes means for changing a destination of the parcel.

5. The system according to any preceding claim, wherein the parcel is arranged to display a barcode and the indicator means (208) includes means for changing the barcode.

6. The system according to Claim 5, wherein the parcel is provided with electronic ink to display the barcode.

7. The system according to Claim 5, wherein the means for changing the barcode includes means for moving a first barcode away from a visible position on the parcel and replacing the first barcode at the visible position with a second barcode.

8. The system according to Claim 5, 6 or 7, wherein the barcode is a 4-State Customer Barcode (4CB).

9. The system according to any one of Claims 5 to 8, wherein the reading means (104) includes means for reading the barcode.

10. The system according to any preceding claim, further comprising:
means, responsive to said reading means, for triggering shipment of a replacement parcel.

11. The system according to any preceding claim, wherein the indicator means provides a human-readable indication of the change in condition.

12. The system according to any preceding claim, wherein the indicator means includes means for changing a human-readable destination address displayed by the parcel.
